# EUROPEAN PATENT APPLICATION

(11) **EP 3 593 615 A1**
(43) Date of publication of application: **15.01.2020**
(21) Application number: 18764079.2
(22) Date of filing: 28.02.2018
(51) Int. Cl.: A01D 34/00, G01C 9/06, G01C 9/10

(54) **GARDEN TOOL AND TOPPLING PREVENTION METHOD THEREFOR**

(30) Priority: 10.03.2017 CN 201710140280
(71) Applicant: Skybest Electric Appliance (Suzhou) Co., Ltd., Jiangsu 215000 (CN)
(72) Inventor: WEI, Juan, Jiangsu 215000 (CN); CHEN, Fei, Jiangsu 215000 (CN); CHEN, Zeng, Jiangsu 215000 (CN); ZHANG, Tianrong, Jiangsu 215000 (CN)
(74) Representative: Stuttard, Garry Philip
(86) International application number: PCT/CN2018/077570
(87) International publication number: WO 2018/161830

(57) **Abstract**

A garden tool, comprising a tilt angle detecting module connected with the main control module, wherein the tilt angle detecting module is used for detecting the tilt angle between the cutting tool and the horizontal plane, when the tilt angle is greater than a preset value, the tilt angle detecting module sends a shutdown signal to the main control module, and the main control module receives the shutdown signal and turns off the power supply to stop the electric motor. The garden tool can automatically stop working when the garden tool is accidentally cocked, is in the state of being folded and stored, has an overlarge tilt angle or is toppled, so that the personal safety of the user is ensured. The present invention also relates to a toppling protection method for said garden tool.

## Description

### TECHNICAL FIELD

The invention relates to a garden tool, in particular to a mower with a toppling protection function.

### BACKGROUND

In case that the mower in the prior art is in use, since the motor speed of the mower is very high, when the machine is accidentally forward or backward cocked, or leftward or rightward tilted to a large angle, or is dragged to walk after the mower is folded to store, due to the lack of a toppling protection function, the motor will not stop running, and the exposed cutting tool will continue to rotate and cut at a high speed, therefore posing a certain security threat to the objects around the device and the personal safety of the user.

### SUMMARY

### Technical Problem

The object of the present invention is to provide a garden tool with a toppling protection function, the garden tool can automatically stop working when the garden tool is accidentally cocked, is in the state of being folded and stored, has an overlarge tilt angle or is toppled, thereby ensuring the safety of a user.

### Technical Solution

In order to achieve the above object, the present invention provides a garden tool comprising a base, a motor arranged on the base and a cutting tool drivingly connected with the motor , a power supply and a main control module electrically connected with the power supply and used for controlling the motor, and further comprising a tilt angle detecting module connected with the main control module, wherein the tilt angle detecting module is used for detecting the tilt angle between the cutting tool and the horizontal plane, when the tilt angle is greater than a preset value, the tilt angle detecting module sends a shutdown signal to the main control module, and the main control module receives the shutdown signal and turns off the power supply to stop the electric motor.

As a further improvement of an embodiment of the present invention, the tilt angle detecting module comprises a tilt angle sensor for detecting a tilt angle between the cutting tool and the horizontal plane, and a controller for processing tilt angle signals input by the tilt angle sensor.

As a further refinement of an embodiment of the present invention, the tilt angle detecting module comprises at least one photoelectric tilt angle sensor.

As a further improvement of an embodiment of the present invention, the photoelectric tilt angle sensor comprises a housing, and a transmitting tube, a bin body, a bin cover and a receiving tube orderly disposed in the housing from bottom to top, wherein the transmitting tube is used for transmitting an optical signal, the bin body is provided with a first hole, the bin cover is provided with a second hole, the receiving tube is used for receiving the optical signal and converting the optical signal into an electric signal, the first hole and the second hole are coaxially arranged along the gravity direction, the bin body is provided with a groove for accommodating a ball, the ball can freely roll along the groove surface under the action of gravity, an intersection angle equal to a preset value is formed between the longitudinal section of the groove and the horizontal plane, the photoelectric tilt angle sensor has at least two working states, and when the tilt angle is less than the preset value, the ball of the photoelectric tilt angle sensor covers the first hole to block the optical signal transmitted from the first hole to the second hole by the transmitting tube; when the tilt angle is greater than the preset value, the ball of the photoelectric tilt angle sensor keeps far away from the first hole, and the receiving tube receives optical signal transmitted from the first hole to the second hole by the transmitting tube.

As a further improvement of an embodiment of the present invention, the tilt angle detecting module is arranged on the base.

As a further improvement of the embodiment of the invention, the base is rotatably provided with at least one front wheel and at least two rear wheels, and the tilt angle detecting module is fixedly arranged on the base near to the rear wheels.

As a further improvement of the embodiment of the invention, the preset value of the tilt angle detecting module is 35°-55°.

As a further improvement of an embodiment of the present invention, the preset value of the tilt angle detecting module is 45°.

As a further improvement of an embodiment of the present invention, the tilt angle detecting module is provided with a delay unit, and the delay unit is used for setting a preset delay time, wherein after the preset delay time, a shutdown signal is sent to the main control module if the tilt angle detected by the tilt angle detecting module is greater than the preset value.

As a further improvement of an embodiment of the present invention, the preset delay time is set to be 1 to 3 seconds.

As a further improvement of an embodiment of the present invention, the garden tool is a mower.

The present invention also provides a toppling protection method for the above garden tool, comprising:
the power supply supplies power to the main control module and the tilt angle detecting module;
the tilt angle detecting module detects the tilt angle of the cutting tool, and when the tilt angle is greater than a preset value, the tilt angle detecting module sends a shutdown signal to the main control module;
and the main control module receives the shutdown signal and stops the power supply to stop the motor.

As a further improvement of an embodiment of the present invention, the tilt angle detecting module is provided with a delay unit, and the delay unit is used for setting a preset delay time, and after the preset delay time, a shutdown signal is sent to the main control module if the tilt angle detected by the tilt angle detecting module is greater than the preset value.

As a further improvement of an embodiment of the present invention, the preset delay time is set to be 1 to 3 seconds.

### Beneficial Effect

The technical effect that can be achieved by the present invention is that since a photoelectric sensor is used for detecting the tilt angle between the garden tool and the horizontal plane, the garden tool can automatically stop working when the garden tool is accidentally cocked, is in the state of being folded and stored, has an overlarge tilt angle or is toppled, so that the personal safety of the user is ensured. And an anti-shake function is also provided, and if the machine shakes or the machine titles because of bumping caused by encountering stones etc., due to the delay set, the tilt angle detecting module will not be falsely triggered to cause the motor to be stopped. Meanwhile, the mounting position and the modular design of the tilt angle detecting module are more convenient to mount, and to disassemble and replace independently.

### BRIEF DESCRIPTION OF THE DRAWINGS

Fig. 1 is a top view of a mower according to a first preferred embodiment of the present invention;
Fig. 2 is a sectional view taken along the direction A-A in Fig. 1;
Fig. 3 is a schematic diagram of a mower circuit module according to the first preferred embodiment of the present invention;
Fig. 4 is a schematic cross-sectional view of a photoelectric tilt angle sensor according to the first preferred embodiment of the present invention;
Fig. 5 is a schematic view of a mower circuit module according to a second preferred embodiment of the present invention;
   wherein:
   1. base; 2. motor; 3. cutting tool; 4. power supply; 5. main control module; 6. tilt angle detecting module; 7. switch signal module; 8. front wheel; 9. rear wheel; 10. motor drive module; 11. mower; 12. push rod; 13. relays 14. sensor; 15. controller; 16. housing; 17. transmitting tube; 18. first hole; 19. bin body; 20. second hole; 21. bin cover; 22. receiving tube; 23. ball; 24. groove; 25. groove surface; 26. intersection angle; 27. photoelectric tilt angle sensor.

### DETAILED DESCRIPTION

The present invention will be described in detail below with reference to specific embodiments shown in the accompanying drawings. These embodiments are not intended to limit the present invention, and structural, methodological, or functional changes made by those skilled in the art based on these embodiments are intended to be comprised within the scope of the present invention.

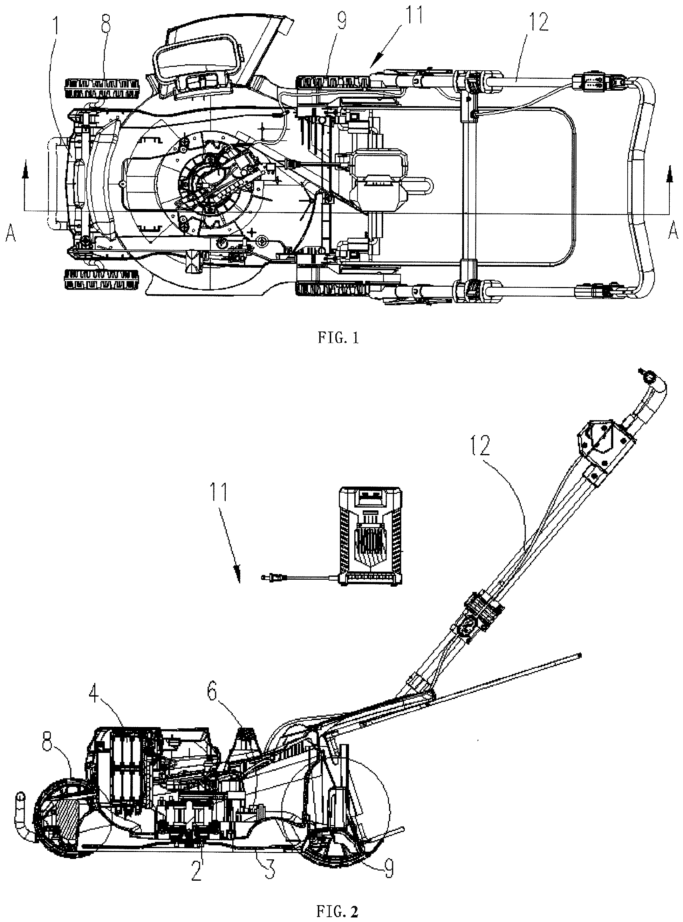

Referring to Figs. 1 and 2, a preferred embodiment of the garden tool of the present invention is shown, the garden tool in the embodiment is a mower 11 comprising a base 1, rollers, and a push rod 12 connected to the base 1 and extending rearward, wherein the push rod 12 has a folding or telescopic function for convenient storage. The mower 11 has a cutting tool 3 for mowing, a motor 2 for driving the cutting tool 3 to move, and a main control module 5 for controlling the mower. Specifically, the cutting tool 3, the motor 2 and the main control module 5 are fixedly mounted on the base 1. Correspondingly, the mower is also provided with a power supply 4 electrically connected with the main control module 5, and the cutting tool 3 is connected with the output shaft of the motor 2, and extends out of the base 1. The main control module 5 is generally a PCB or a microprocessor, and controls the behavior of the mower according to the operation action of an operator or a preset program.

The base 1 of the mower 11 is rotatably provided with four rollers for supporting the mower 11 to move on the ground. The rollers comprise a pair of front wheels 8 supporting the front portion of the base 1 and a pair of rear wheels 9 supporting the rear portion of the base 1. In Fig. 1, the direction in which the mower 11 travels is defined as the front.

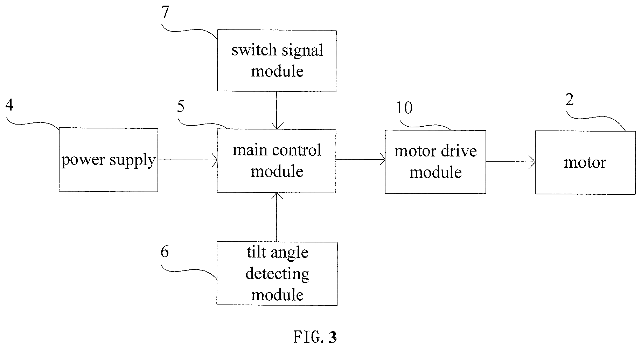

As shown in Fig. 3, the mower of the present invention comprises the power supply 4, the main control module 5, a switch signal module 7, a motor drive module 10, and the motor 2. The power supply 4 supplies power to the main control module 5 through the switch signal module 7 and a tilt angle detecting module 6. A user turns on the switch when needing to use the mower, and the switch signal module 7 sends a switch conducting signal to the main control module 5. Under the normal working state of no topping or side turning of the mower, the main control module 5 sends a driving signal to the motor drive module 10 to drive the motor 2 to normally mow.

The mower further comprises the tilt angle detecting module 6 which is connected with the main control module 5 and used for detecting the tilt angle between the cutting tool and the horizontal plane, and the tilt angle detecting module 6 is arranged at any position of the mower where the toppling state of the mower can be sensitively sensed. Preferably, in this embodiment, the tilt angle detecting module 6 is fixedly disposed on the mounting seat of the base 1 near to the rear wheels 9 for facilitated arrangement and the installation since the base 1 between the two rear wheels 9 has a larger space and is stopr to the main control module 5. Moreover, the main control module 5 and the tilt angle detecting module 6 are provided separately in a relatively independently way, so that the tilt angle detecting module 6 is convenient to be detached and replaced independently if the tilt angle detecting module 6 breaks down, thereby facilitating modularization and application to other types of mowers or other garden tools.

In this embodiment, the tilt angle detecting module 6 is a PCB comprising a photoelectric tilt angle sensor 27 and a control circuit thereof, wherein the photoelectric tilt angle sensor can sense the tilt angle between the sensor and the horizontal plane and output a circuit on-off signal. When the mower is toppled if a user uses the mower and carelessly meets a slope, or the mower is dragged to walk after being folded and stored, since the cutting tool 3 and the tilt angle detecting module 6 are both fixedly arranged on the base 1, when the mower is toppled, the toppling angle of the cutting tool 3 is greater than a preset value, the tilt angle detecting module 6 sends a shutdown signal to the main control module 5, and the main control module 5 receives the shutdown signal and cuts off the power supply 4 and the motor drive module 10 to stop the motor 2. Compared with the prior art, the threat of the exposed cutting tool 3 to the objects around the machine and the personal safety of users is avoided, and the use safety is greatly improved.

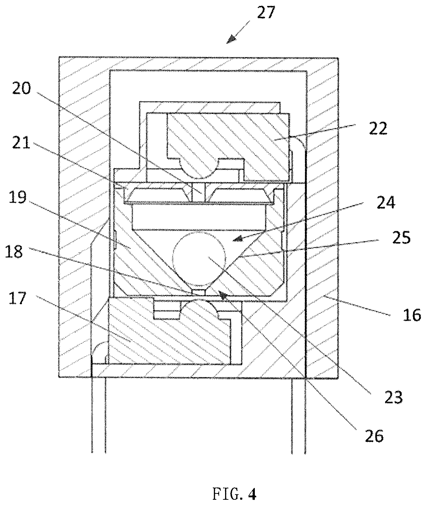

As shown in Fig. 4, the photoelectric tilt angle sensor 27 comprises a housing 16, and a transmitting tube 17, a bin body 19, a bin cover 21 and a receiving tube 22 orderly disposed in the housing 16 from bottom to top, wherein the transmitting tube 17 is used for transmitting an optical signal, the bin body 19 is provided with a first hole 18, the bin cover 21 is provided with a second hole 20, and the receiving tube 22 is used for receiving the optical signal and converting the optical signal into an electric signal, the first hole 18 and the second hole 20 are coaxially arranged along the gravity direction, the bin body 19 is provided with a groove 24 for accommodating a ball 23, the ball 23 can freely roll along a groove surface 25 under the action of gravity, and an intersection angle 26 equal to a preset value is provided between the longitudinal section of the groove 24 and the horizontal plane.

The photoelectric tilt angle sensor 27 has at least two working states, wherein when the tilt angle is less than the preset value, the ball 23 of the photoelectric tilt angle sensor 27 covers the first hole 18 to block the optical signal transmitted from the first hole 18 to the second hole 20 by the transmitting tube 17, and at the moment, the mower is in a non-toppling normal working state; when the tilt angle is greater than the preset value, the ball 23 of the photoelectric tilt angle sensor 27 keeps far away from the first hole 18, the receiving tube 22 receives the optical signal transmitted from the first hole 18 to the second hole 20 by the transmitting tube 17, the mower is in a toppling state at the moment, and the tilt angle detecting module 6 sends a shutdown signal to the main control module 5 to stop the motor 2. The photoelectric toppling sensor 27 of the present embodiment is simple in structure and sensitive in sensing angle, the photoelectric tilt angle sensor 27 is packaged on the PCB, and the PCB is arranged in parallel with the base of the mower.

The preset value of the tilt angle of the photoelectric tilt angle sensor can be 35°-55°. In this embodiment, the preset value of the tilt angle of the photoelectric tilt angle sensor is 45°. Accordingly, the intersection angle 26 between the longitudinal section of the groove 24 of the photoelectric inclination sensor 27 and the horizontal plane is also 45°. Of course, the preset value may be set to 35°, 40°, 50°, 55° or other angles as required. The groove surface 25 can be an inverted conical surface, so that the ball can sensitively sense the tilt angle change no matter towards any direction the garden tool topples.

The tilt angle detecting module 6 is provided with a delay unit. The delay unit can set a delay time of 1 to 3 seconds after the tilt angle detected by the tilt angle detecting module 6 is greater than a preset value, and after the delay time of 1 to 3 seconds, a shutdown signal is sent to the main control module 5 if the tilt angle detected by the tilt angle detecting module 6 is greater than the preset value. In this embodiment, the delay unit preferably sets the delay time to be 1.5 seconds, that is, only when the mower has been continued toppling for more than 1.5 seconds, the tilt angle detecting module 6 sends a shutdown signal to the main control module 5 to stop the motor, if the mower shakes or titles because of bumping (for example, encountering stones etc.), due to the delay set, the tilt angle detecting module 6 will not be falsely triggered to cause the motor to falsely stop when the titling angle lasts only for a short time, and compared with the prior art, the anti-shake function is also provided. Of course, the delay time can be set to be 1 second, 2 seconds or 3 seconds according to different requirements.

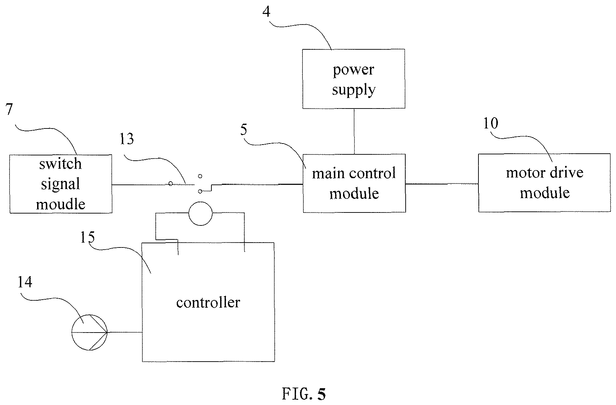

In another preferred embodiment, as shown in Fig. 5, the tilt angle detecting module 6 comprises a relay 13, and a sensor 14 and a controller 15 for controlling the relay to start and stop. The relay 13 is connected in series between the switch signal module 7 and the main control module 5, and can be used for determining the tilt angle of the cutting tool in the initial state. That is, if the initial state of the mower is the toppling state, after the user turns on the switch of the mower, the switch signal module 7 sends a switch on signal to the main control module 5, at the moment, since the sensor 14 detects that the tilt angle is greater than the preset value, the controller 15 controls the relay 13 to be disconnected, and the main control module 5 receives the shutdown signal and turns off the power supply 4 to stop the motor 2. Therefore, under the condition that the toppling angle in the initial state is greater than the preset value, the mower will not operate incorrectly even if a user turns on the mower switch, thus ensuring the personal safety of the user. The controller 15 is typically a single chip microcomputer.

The present invention also provides a toppling protection method for the garden tool, comprising the following steps:
the power supply 4 supplies power to the main control module 5 and the tilt angle detecting module 6;
the tilt angle detecting module 6 detects the tilt angle of the cutting tool 3, and when the tilt angle is greater than a preset value, the tilt angle detecting module 6 sends a shutdown signal to the main control module 5;
the main control module 5 receives the shutdown signal and turns off the power supply 4 to stop the motor 2.

Compared with the prior art, the garden tool will automatically stop working when the garden tool is accidentally tilted, has an overlarge tilt angle or is toppled, so that the threat of the exposed cutting tool to objects around the machine and the personal safety of a user is avoided, thereby improving the use safety.

The garden tool also comprises a switch signal module 7 which is connected with the tilt angle detecting module 6 in series and is used for inputting switch signals of the garden tool, and the tilt angle detecting module 6 comprises a relay 13, and a sensor 14 and a controller 15 used for controlling the relay to start and stop. The relay 13 is connected in series between the switch signal module 7 and the main control module 5, and can be used for determining the tilt angle of the cutting tool in the initial state. That is, if the initial state of the mower is the toppling state, after the user turns on the switch of the mower, the switch signal module 7 sends a switch on signal to the main control module 5, at the moment, since the sensor 14 detects that the tilt angle is greater than the preset value, the controller 15 controls the relay 13 to disconnect, and the main control module 5 receives the shutdown signal and turns off the power supply 4 to stop the motor 2. Therefore, under the condition that the toppling angle in the initial state is greater than the preset value, the mower will not operate incorrectly even if a user turns on the mower switch, thus ensuring the personal safety of the user. The controller 15 is typically a single chip microcomputer.

The preset value of the tilt angle detecting module is 35°-55°. The preset value of the tilt angle is preferably 45°, of course the preset value may be set to other angles such as 35°, 40°, 50°, 55° and the like as required.

The tilt angle detecting module 6 is also provided with a delay unit. The delay unit can set a delay time of 1 to 3 seconds after the tilt angle detected by the tilt angle detecting module 6 is greater than a preset value, and after the delay time of 1 to 3 seconds, a shutdown signal is sent to the main control module 5 if the tilt angle detected by the tilt angle detecting module 6 is greater than the preset value. The delay unit preferably sets the delay time to be 1.5 seconds, that is, only when the mower keeps continuing toppling for more than 1.5 seconds, the tilt angle detecting module 6 sends a shutdown signal to the main control module 5 to stop the motor, so that if the mower shakes or titles because of bumping (for example, encountering stones etc.), due to the delay set, the tilt angle detecting module 6 will not be falsely triggered to cause the motor to be falsely stopped, and compared with the prior art, the anti-shake function is also provided. Of course, the delay time can be set to be 1 second, 2 seconds or 3 seconds according to different requirements.

It should be understood that although the description has been described in terms of embodiments, not every embodiment contains only an independent technical solution, and that the describing method of description is merely for purposes of clarity. One skilled in the art should take the description as a whole, and the technical solutions in the embodiments may be suitably combined to form additional embodiments that may be understood by those skilled in the art.

The above detailed description is only specific description of the possible embodiments of the present invention, and is not intended to limit the scope of the present invention, and all equivalent embodiments or modifications that do not depart from the spirit of the present invention are intended to be comprised within the scope of the present invention.

## Claims

1. A garden tool, comprising:
a base,
a motor arranged on the base,
a cutting tool drivingly connected with the motor,
and a power supply and a main control module electrically connected with the power supply and used for controlling the motor, **characterized by** further comprising:
a tilt angle detecting module connected with the main control module, wherein the tilt angle detecting module is used for detecting the tilt angle between the cutting tool and the horizontal plane, when the tilt angle is greater than a preset value, the tilt angle detecting module sends a shutdown signal to the main control module, and the main control module receives the shutdown signal and turns off the power supply to stop the electric motor.

2. The garden tool according to claim 1, **characterized in that**: the tilt angle detecting module comprises:
a tilt angle sensor for detecting a tilt angle between the cutting tool and the horizontal plane,
and a controller for processing tilt angle signals input by the tilt angle sensor.

3. The garden tool according to claim 1, **characterized in that**: the tilt angle detecting module comprises at least one photoelectric tilt angle sensor.

4. The garden tool according to claim 3, **characterized in that**: the photoelectric tilt angle sensor comprises:
a housing,
and a transmitting tube, a bin body, a bin cover, a receiving tube orderly disposed in the housing from bottom to top, wherein the transmitting tube is used for transmitting an optical signal, the bin body is provided with a first hole, the bin cover is provided with a second hole, the receiving tube is used for receiving the optical signal and converting the optical signal into an electric signal, the first hole and the second hole are coaxially arranged along the gravity direction, the bin body is provided with a groove for accommodating a ball, the ball can freely roll along the groove surface under the action of gravity, an intersection angle equal to a preset value is formed between the longitudinal section of the groove and the horizontal plane, the photoelectric tilt angle sensor has at least two working states, and when the tilt angle is less than the preset value, the ball of the photoelectric tilt angle sensor covers the first hole to block the optical signal transmitted from the first hole to the second hole by the transmitting tube; when the tilt angle is greater than the preset value, the ball of the photoelectric tilt angle sensor keeps far away from the first hole, and the receiving tube receives the optical signal transmitted from the first hole to the second hole by the transmitting tube.

5. The garden tool according to claim 1, **characterized in that**: the tilt angle detecting module is arranged on the base.

6. The garden tool according to claim 5, **characterized in that**: the base is rotatably provided with at least one front wheel and at least two rear wheels, and the tilt angle detecting module is fixedly arranged on the base near to the rear wheels.

7. The garden tool according to claim 1, **characterized in that**: the preset value of the tilt angle detecting module is 35°-55°.

8. The garden tool according to claim 7, wherein: the preset value of the tilt angle detecting module is 45°.

9. The garden tool according to claim 1, **characterized in that**: the tilt angle detecting module is provided with a delay unit, and the delay unit is used for setting a preset delay time, and after the preset delay time, a shutdown signal is sent to the main control module if the tilt angle detected by the tilt angle detecting module is greater than the preset value.

10. The garden tool according to claim 9, wherein: the preset delay time is set to be 1 to 3 seconds.

11. The garden tool according to any one of claims 1 to 10, **characterized in that**: the garden tool is a mower.

12. A toppling protection method for the garden tool according to claim 11, **characterized in** comprising:
the power supply supplies power to the main control module and the tilt angle detecting module;
the tilt angle detecting module detects the tilt angle of the cutting tool, and when the tilt angle is greater than a preset value, the tilt angle detecting module sends a shutdown signal to the main control module;
and the main control module receives the shutdown signal and turns off the power supply to stop the motor.

13. The toppling protection method for the garden tool according to claim 12, **characterized in that**: the tilt angle detecting module is provided with a delay unit, and the delay unit is used for setting a preset delay time, and after the preset delay time, a shutdown signal is sent to the main control module if the tilt angle detected by the tilt angle detecting module is greater than the preset value.

14. The toppling protection method for the garden tool according to claim 13, **characterized in that**: the preset delay time is set to be 1 to 3 seconds.
